# EUROPÄISCHE PATENTANMELDUNG

(11) **EP 0 875 272 A2**
(43) Veröffentlichungstag der Anmeldung: **04.11.1998**
(21) Anmeldenummer: 98105499.2
(22) Anmeldetag: 26.03.1998
(51) Int. Cl.: B01D 39/20

(54) **Verfahren zur Herstellung von Heissgasfilter - Elementen sowie die Verwendung des Filters zur Heissgasfiltration von Rauchgasen**

(30) Priorität: 27.03.1997 DE 19713068
(71) Anmelder: ECM Ingenieur-Unternehmen für Energie-und Umwelttechnik GmbH, 81539 München (DE); IABG Industrieanlagen-Betriebsgesellschaft mbH, 85521 Ottobrunn (DE)
(72) Erfinder: Krödel, Matthias, 85521 Ottobrunn (DE); Papenburg, Ulrich, 85659 Egmating (DE); Pfrang, Wilhelm, 85354 Freising (DE); Walter, Stefan, 85635 Höhenkirchen-Siegertsbrunn (DE)

(57) **Zusammenfassung**

Die Erfindung betrifft das Verfahren zur Herstellung von Heißgasfilter-Elementen sowie mögliche Ausführungsformen von Filterelementen, die eine Staubabscheidung von heißen Rauchgasen noch bei Temperaturen größer 800°C erlauben.

Aufgabe der Erfindung ist es, durch den Einsatz eines Heißgasfilters bestehende Industrieanlagen, wie Verbrennungsanlagen, Kraftwerke sowie Prozesse, die bei Temperaturen von > 800 °C ablaufen, wirtschaftlicher und effizienter zu machen, indem die Gasströme bereits bei Betriebstemperaturen gereinigt werden und nicht erst abgekühlt und später wieder aufgeheizt werden müssen.

Gemäß der Erfindung wird dies dadurch erreicht, daß das Filtermedium und/oder das Filtergehäuse aus hochtemperaturbeständiger, abrasions- und korrosionsfester faserverstärkter Keramik besteht.

Anwendungsgebiet der Erfindung sind Rauchgasreinigungsanlagen z.B. von Verbrennungsanlagen und Kraftwerken, Prozessanlagen z.B. zur Abtrennung von Stäuben bei > 800 °C.

## Beschreibung

Die Erfindung betrifft ein Verfahren zur Herstellung von Heißgasfiltern aus faserverstärkter Keramik sowie die Verwendung des Filters in der Heißgasfiltration von Rauchgasen.

Ein Heißgasfilter, der bei Temperaturen oberhalb 400 °C eine ausreichende Staub- und Schadstoffabscheidung von Rauchgasen gewährleisten kann, ist dann besonders sinnvoll, wenn die heißen und staubfreien Gase in nachgeschalteten Anlagen auf hohem Temperaturniveau eine weitere Verwendung finden sollen. Er ist sogar notwendig, wenn bei zu großer Abkühlung der Abgase zuvor gezielt ausgetriebene flüchtige Verbindungen und Schadstoffe wieder kondensieren würden, wie dies bei der Emissionsminderung von Quecksilberverbindungen u.a. beispielsweise der Fall ist.
Neben den Aspekten des Umweltschutzes und der Luftreinhaltung ist hauptsächlich die Einführung energiesparender Verfahren durch die Heißgasfiltration möglich, insbesondere dann, wenn geringe Reingasstaubgehalte gefordert werden.

Bei neuen Kraftwerkstypen wird neben der konventionellen Stromerzeugung durch Dampfturbinen auch Strom mittels Heißgasturbinen erzeugt. Die unter Druck stehenden Rauchgase (T= 800 °C bis 1000 °C, P= > 20 bar), die den Kessel verlassen, treiben eine Gasturbine an, die elektrischen Strom und darüber hinaus den entsprechenden Arbeitsdruck für den Kessel erzeugen. Die Anforderungen an das Reingas zum Schutz der Turbinenschaufeln sind hierbei sehr hoch. Bei einer Partikelgröße von max. 10 µm dürfen im Reingas nur 5 mg/m³ bis max 10 mg/m³ Flugasche verbleiben. Massenkraftabscheider erreichen diese niedrigen Staubgehalte nicht, sie sind lediglich als Vorabscheider verwendbar.
Auch bei der Kohlevergasung unter Druck müssen die Heißgase vor der Turbine mittels Heißgasfilter vom Staub gereinigt werden. Verglichen mit dem Einsatz von Heißgasfiltern in Kraftwerken sind lediglich die Art der Gase und Aschen hierbei unterschiedlich. Die Filtrationsbedingungen sind gleich.

Aber auch bei vielen anderen industriellen Prozessen fallen heiße Gase an, die zur Wärmerückgewinnung in Wärmetauschern gekühlt werden. Sind die Gase staubbeladen, so führt dies bei starken Verschmutzungen zu einer Herabsetzung des Wirkungsgrades und bei Erosion an den Wärmetauscherflächen zu einem Absinken der Verfügbarkeit der Anlage. Mit einer vorgeschalteten Staubabscheidung im Hochtemperaturbereich sind diese Nachteile einfach zu beseitigen, vor allem, da eine Staubabscheidung im Sinne der TA-Luft in jedem Fall durchzuführen ist und außerdem der Staub bei anschließenden Prozessen nicht mehr stören kann.

Neben den Anwendungen bei hohen Temperaturen kann der Einsatz von hochtemperaturbeständigen Filtermedien auch im Bereich niedrigerer Temperaturen sinnvoll sein. Dies gilt vor allem für Anlagen, in denen pyrophore Stäube filtriert werden müssen oder wo mit Funkenflug wie z.B. in der Holzverbrennung zu rechnen ist. Die Filterwirksamkeit und die Verfügbarkeit der temperaturbeständigen Filtermedien wird in diesem Einsatzfall nicht beeinträchtigt.

In konventionellen Gasreinigungsanlagen müssen die heißen Rauchgase erst abgekühlt werden, bevor sie durch entsprechende Massenkraftabscheider, Gaswäscher, Schlauch- oder Elektrofilter geleitet werden können. Bei manchen Verfahren müssen sie nach diesem Reinigungsschritt meistens wieder aufgeheizt werden. Dieser Abkühl- und Aufheizprozeß ist mit einem hohen Energieaufwand verbunden. Der Betrieb derartiger Anlagen ist aus ökonomischer und ökologischer Sicht nicht effizient.

Für Filtermedien, die bei hohen Temperaturen eingesetzt werden sollen, bietet sich die Keramik als Werkstoff an, wobei Siliciumcarbid wegen seiner guten Eigenschaften von besonderem Interesse ist. Die hohe Temperatur- und Temperaturwechselbeständigkeit dieses Materials sowie seine gute chemische Beständigkeit macht es besonders geeignet für diesen Anwendungsfall. In den Patentschriften Europa-Patentanmeldung EP-0327653, US-Patent US 5.075.160 und US-Patentschrift US-5.223.138 sind Verfahren zur Herstellung von Heißgasfiltern auf pulverkeramischer Basis beschrieben.
Alle die in den vorgenannten Patenschriften angeführten Verfahren haben Nachteile, wie z.B. hohe Investitionskosten durch spezielle und aufwendige Herstellungsverfahren, hohe Materialkosten und thermische Beständigkeit nur bis ca. 800 °C.

Da bei allen thermischen Prozessen der thermodynamische Wirkungsgrad mit steigender Temperatur zunimmt, werden derzeit zahlreiche Versuche unternommen, die Anwendungstemperaturen von Heißgasfiltern bei gleicher Lebensdauer zu erhöhen.

### Beschreibung des Verfahrens:

Der Erfindung liegt die Aufgabe zugrunde, ein Verfahren bzw. einen Hochtemperatur-Heißgasfilter beliebiger Geometrie dahingehend weiterzubilden, daß ein Heigasfilter oder Filterelement aus faserverstärkter Keramik mit einer hohen aktiven inneren Oberfläche und verbesserten mechanischen, thermischen sowie thermochemischen Eigenschaften (Korrosionsbeständigkeit) und damit einher gehender Wirkungsgradverbesserung in einfacher Weise herstellbar ist.

Diese Aufgabe wird durch die im Kennzeichen der einzelnen Patentansprüche angegebenen Merkmale gelöst.

Der erfindungsgemäße Heißgasfilter besteht in einer möglichen Ausführungsform aus faserverstärkten Keramikkerzen, die eine Temperaturbeständigkeit bis zu 1300 °C, in reduzierender Atmosphäre bis 2000 °C besitzen. Das Material, aus dem die Kerzen bestehen, ist ein korrosionsbeständiger kohlenstoffaserverstärkter oder siliciumcarbidverstärkter Filz, Vlies oder ein Gewebe, das je nach Anforderungsprofil bis zu einer Rohdichte von 0,1 bis 1,2 g/cm³ verdichtet wurde und eine offene Porosität von 20 bis 90 % aufweist. Die Faseroberflächen im Inneren des Filters sind je nach Anwendung mit thermo-chemisch resistenten Schichten aus Kohlenstoff oder Siliciumcarbid oder Siliciumdioxid oder katalytisch wirkenden Schichten beschichtet. Die Heißgasfilterelemente/Filterkerzen aus faserverstärkter Keramik werden mittels Druckluftimpuls oder je nach Anforderung auch mit Inertgas abgereinigt, wobei die Abreinigung zeit- oder differenzdruckgesteuert über den gesamten Filter erfolgt.

Mit der Entwicklung dieses hochtemperatur- und korrosionsbeständigen Filtermediums, das Temperaturen bis 1300 °C an Luft bzw. über 2000 °C in reduzierender Atmosphäre aushält, eine hohe chemische Beständigkeit gegenüber Säuren und Laugen besitzt und sich darüberhinaus zudem ausgezeichnet abreinigen läßt, können Staubemmissionswerte von < 10 mg/Nm³ erzielt werden.

Hintergrund für diese Entwicklung waren die thermische Aufbereitung und Verwertung von Roh-, Rest- und Abfallstoffen sowie neue Kraftwerkstechnologien wie z.B. die druckaufgeladene Wirbelschichtfeuerung und die Kohlevergasung, die ohne ein derartiges Hochtemperatur-Filtermedium wirtschaftlich nicht durchführbar sind. Die entscheidenden Vorteile des erfindungsgemäßen HT-Heißgasfilters aus faserverstärkter Keramik sind u.a.:
- Sehr hohe chemische Beständigkeit auch bei hohen Temperaturen gegenüber chemisch aggressiven Medien ( alle Säuren und Laugen etc.),
- Hochtemperaturbeständigkeit und HT-Festigkeit bis 1300 °C an Luft und bis 2000 °C in sauerstoffarmer Atmosphäre,
- hohe Wärmeleitfähigkeit und damit verbunden eine ausgezeichnete Temperaturhomogenität
- Reingasstaubgehalte von kleiner 10 mg/Nm³ (17. BlmSchV)
- eine hohe Luftdurchlässigkeit von 50-100 l/dm² bei geringen und einstellbaren Dichten (0,1-1,2 g/cm³) bzw. Porositäten im Bereich von 20-90 %
- eine hohe Temperaturwechselbeständigkeit (> 2000 K/s)
- ein geringes über die Dichte einstellbares Flächengewicht im Bereich von 3000 bis 5000 g/m²
- niedrige Betriebskosten und minimaler Wartungsaufwand (Rentabilitätssteigerung)
- Nichtbrennbarkeit nach DIN 4102 Klasse A1
- Abreinigbar mittels Preßluft oder Inergas wie konventionelle Nadelfilz-Filterschläuche und
- die Verwendung von kalter Preßluft oder Inergas für die Abreinigung.

Ein weiterer Vorteil des erfindungsgemäßen Verfahrens liegt darin, daß preisgünstige, handelsübliche Werkstoffe bzw. Halbzeuge verwendet werden können, die sich auf jeder konventionellen Werkzeugmaschine bearbeiten lassen.

Darüber hinaus können die Dichte (Raum- /Flächengewicht) und die damit verbundene offene Porosität bzw. Filteroberfläche, die Temperatur- und die Temperaturwechselbeständigkeit, die chemische Resistenz, die Wärmeleitfähigkeit und die Festigkeit gezielt über die Auswahl der Rohstoffe (Art, Länge, Orientierung und Menge der Fasern bzw. Art und Menge der Harzbindemittel) und/oder die Art der Formgebungsprozesse (Pressen, Wickeln, Laminieren u.a.) der faserverstärkten Rohstrukturen und/oder die Quantität bzw. Qualität der thermischen Infiltrations-/ Verdichtungsprozesse eingestellt werden. Die Wärmeausdehnungskoeffizienten der erfindungsgemäß eingesetzten Werkstoffgruppen sind untereinander sehr ähnlich; somit ergeben sich genaue, auch unter Hochtemperatureinfluß formstabile Teile, auch bei großen Abmessungen.

Dabei können vorteilhafterweise jegliche kohlenstoffaserverstärkten Kohlenstoff-Rohstoffe, insbesondere auf Lang- oder Kurzfaserbasis sowie orientierter oder unorientierter Faserarchitektur (Faseraufbau) verwendet werden. Darüber hinaus kann das Verfahren auch an bekannten Wabenstrukturen auf Papier- Zellstoff- oder Kohlenstoff bzw. Kohlenstoffaserbasis angewendet werden.

In der folgenden Beschreibung wird in erster Linie davon ausgegangen, daß Kohlenstoff bzw. Kohlenstoffasern und/oder Siliciumcarbid oder Siliciumcarbidfasern und/oder Aluminiumoxid bzw. Aluminiumoxidfasern als Grundbaustein für die Formkörper verwendet werden.
Es soll aber an dieser Stelle ausdrücklich darauf hingewiesen sein, daß die Entwicklung von Materialien ähnlichen feinstrukturellen Aufbaus bzw. die Verwendung derartiger Stoffe vom Erfindungsgedanken mit umfaßt ist. Ein wesentlicher Gedanke der vorliegenden Erfindung liegt nämlich darin, daß die hoch porösen Heißgasfilter-Grünkörper auf Endmaß bearbeitet und je nach Anforderungsprofil gezielt mit Kohlenstoff und/oder Silicium und/oder Siliciumcarbid und/oder Aluminiumoxid enthaltenden Ausgangsstoffen infiltriert werden, wobei die Infiltrationsmenge und damit die innere Filteroberfläche über die Dichte der Grünkörper und/oder über die Art, Höhe und Dauer der thermischen (Infiltrations-) Behandlung und oder die Art und Menge der angebotenen Infiltrationsmaterialien einstellbar ist.

Weiterhin sei darauf hingewiesen, daß in der nachfolgenden Beschreibung im allgemeinen von faserverstärkten Keramiken bzw. CMC-Werkstoffen (Ceramic Matrix Composites) auf der Basis von kohlenstoffaserverstärktem Kohlenstoff (C/C oder CFC) oder kohlenstoffaserverstärktem Siliciumcarbid (C/SiC) oder siliciumcarbidfaserverstärktes Siliciumcarbid (SiC/SiC) oder aluminiumoxidfaserverstärktes Aluminiumoxid (Al₂O₃/Al₂O₃) zur Herstellung der Filterteile gesprochen wird. Es sind aber auch möglich andere Materialkombinationen als die oben genannten oder andere Keramikfasern als Verstärkungskomponente oder auch andere keramische oder refraktär-metallische Infiltrations- bzw. Matrixwerkstoffe zu verwenden.
Besonders einfach und kostengünstig gestaltet sich das Verfahren jedoch bei der Verwendung von kohlenstoffaserverstärkten Kohlenstoff- und/oder siliciumcarbidfaserverstärkten Siliciumcarbid-Formkörpern.

CFC-Verbundwerkstoffe , welche aus einer Kohlenstoffmatrix und Verstärkungsfasern aus Kohlenstoff bestehen, werden über das Harz-Imprägnier- und Pyrolyseverfahren industriell gefertigt. Diese entstandenen Composite-Werkstoffe zeichnen sich durch eine äußerst günstige Kombination von Werkstoffeigenschaften aus, wie z. B. chemische Resistenz gegenüber Säuren und Laugen, hohe Festigkeit und Temperaturbeständigkeit bis über 2000 °C in inerter Atmosphäre sowie ein quasiduktiles Bruchverhalten in Verbindung mit einer niedrigen Dichte (0,1-1,7 g/cm³).

Die ausgezeichneten Materialeigenschaften von Kohlenstoff und kohlenstoffaserverstärkten Kohlenstoffen (CFC) werden dadurch beeinträchtigt, daß diese Werkstoffe eine relativ geringe Oxidationsbeständigkeit besitzen und nur mit zusätzlicher Beschichtung in sauerstoffhaltiger Atmosphäre eingesetzt werden können. Die geringe Resistenz gegenüber Sauerstoff beschränkt CFC zur Zeit auf den Vakuum- oder Schutzgaseinsatz, da sonst bei Temperaturen oberhalb von 400 °C die Oxidation einsetzt.

Um die Oxidationsbeständigkeit dieser Verbundwerkstoffe zu erhöhen, wurden die sogenannten Ceramic Matrix Composites (CMC) entwickelt. Bei diesen Composite-Werkstoffen werden in die poröse CFC-Matrix refraktäre Metalle und keramische Komponenten infiltriert. Es ist auch die Herstellung von Kurzfaser-Formkörpern möglich, wobei Kurzfasern auf Kohlenstoffbasis in einer Phenolharz-Suspension in Schwebe gehalten werden und bei Temperatursteigerung bis 200 °C aushärten. Bei weiterer Temperaturerhöhung werden die Harzbindemittel (Precursoren) in den Compositequalitäten unter Ausschluß von Sauerstoff carbonisiert.

Die erfindungsgemäßen Bauteile weisen als Grundkörper kohlenstoffaserverstärkten Kohlenstoff und/oder kohlenstoffaserverstärktes Siliciumcarbid und/oder Kohlenstoff-Waben-Composites mit willkürlicher bzw. isotroper Kurzfaserverstärkung ohne Vorzugsorientierung und/oder ein- bis n-dimensionale Langfaser-(Endlos-) Faserverstärkungen mit definierter Vorzugsorientierung auf.

Der eingesetzte CFC-Vollkörper besitzt eine Dichte von höchstens 1,2 g/cm³, d.h. er weist eine hohe offene Porosität auf. Abgesehen von den Poren weist der Vollkörper keine Hohlräume auf, d.h. er ist von seiner Form her ein massiver Körper, z.B. eine Platte, ein Block oder ein Vollzylinder. Bei ein- oder mehrdimensional (Faser)verstärkten CFC-Qualitäten mit Lang- bzw. Endlosfaseraufbau geht man in der Regel von in Harz getränkten Kohlenstofffasergeweben (plan oder gewellt), sog. Prepregs aus, die in beheizbaren axialen Pressen zu CFK-Platten (CFK= kohlenstoffaserverstärkter Kunststoff) oder auf Wickelautomaten zu zylindrischen bzw. rotationssymmetrischen Körpern verarbeitet werden. Eine Verarbeitung von gewellten Geweben führt zu Vollkörpern mit entsprechenden Hohlräumen.

Zur Herstellung von CFC-Vollkörpern auf Kurzfaserbasis werden in bekannter Weise Kohlenstoff- oder Graphitfasern in einem wärmehärtbaren Harzbindemittel suspendiert. Diese Suspension wird in eine Form gegeben und anschließend die Lösungsmittel z.B. durch Erwärmen entfernt und das Harzbindemittel und damit der CFK-Vollkörper ausgehärtet. Bei allen CMC-Qualitäten soll die Faserverstärkung einer Versprödung der keramisierten Verbundwerkstoffe entgegenwirken und ein quasiduktiles (schadentolerantes) Bruchverhalten initiieren. Die aus den bekannten Formgebungsverfahren hergestellten Wabenstrukturen z.B. auf Hartpapier- oder Kohlenstoffaserbasis werden zur Erhöhung der Kohlenstoffausbeute mit einem Harzbindemittel, vorzugsweise Phenolharz oder Peche, imprägniert und in einer anschließenden Wärmebehandlung ausgehärtet.
Gemeinsam ist allen CMC- oder Wabenstrukturen auf CFC- oder C/SiC-Basis die anschließende Pyrolyse (Carbonisierung) des verwendeten Bindemittelharzes im Vakuum oder Schutzgas bei Temperaturen von 800 - 1300 °C. Die erhaltenen CFC- oder C/SiC-Vollkörper oder Wabenstrukturen werden dann vorzugsweise in Vakuum- oder Schutzgasatmosphäre auf Temperaturen von mehr als 2000 °C erhitzt, um eine zumindest teilweise Graphitierung der Kohlenstoffmatrix und der Kohlenstoffmatrix vorzunehmen.
Durch materialabtragende Bearbeitung wird dann aus den Vollkörpern der entsprechende CMC-Rohling hergestellt, der die Maße des herzustellenden Bauteils, also beispielsweise die Struktur einer Filterkerze besitzt. Die materialabtragende Bearbeitung kann beispielsweise durch Drehen, Fräsen oder Schleifen erfolgen, wobei die zur spanabhebenden Bearbeitung von metallischen Werkstoffen bekannten Maschinen eingesetzt werden können.
Zur Verbesserung der Strömungsverhältnisse bzw. Anströmverhältnisse der heißen Rauchgase am Filtermedium oder zur weiteren Gewichtsersparnis können vorteilhafterweise bei der Bearbeitung der CMC-Rohstoffe entsprechende Taschen, Bohrungen Radien oder Hinterschneidungen beliebiger Geometrie eingefräst, gedreht oder gebohrt werden. Die Kohlenstoff-Wabenstrukturen können nach der Carbonisierung an den Stirnseiten mit Kohlenstoffasergeweben (Gewebeprepregs) beliebiger Art mittels eines Harzbindemittels zu einem Verbund laminiert werden. Es ist außerdem möglich, die Wabenstrukturen in das hochporöse Kurzfaser-CFC einzupressen oder die mit Kohlenstoffgeweben ummantelten Wabenstrukturen zu einem Sandwich-System, bestehend aus mehreren Wabenstrukturen, zu verpressen, um so nach der Pyrolyse (Carbonisierung) einen hochtemperaturbeständigen Filterwerkstoff mit hoher chemischer Beständigkeit, hoher Festigkeit und einem durchgängigen Porensystem zu erhalten.

Der nach der Bearbeitung erhaltene CFC- oder C/SiC- oder Wabenrohling, der wie der Vollkörper eine geringe Dichte von 0,1 - 1,2 g/cm³ und damit eine hohe offene Porosität von bis zu 90 Vol.% aufweist, kann anschließend erneut über die Imprägnierung von Harzbindemitteln und deren Pyrolyse weiter infiltriert und verfestigt werden.

Auch eine Infiltration über die chemische (CVI/CVD) und/oder die physikalische Gasphasen-abscheidung (PVD) mit pyrolytischem Kohlenstoff (PyC) und/oder pyrolytischem Siliciumcarbid (PySiC) und/oder Siliciumdioxid bis zu einer Dichte von maximal 1,3 g/cm³, vorzugsweise 0,2 - 1,2 g/cm³, kann zur notwendigen Verfestigung der CFC- oder C/SiC- oder SiC/SiC-Rohlinge bzw. Einstellung des durchgängigen Porenvolumens in den Heißgasfilterelementen führen. Während bei der Harzimprägnierung vorzugsweise Phenolharze und Peche zum Einsatz kommen, wird bei der chemischen Gasphasenabscheidung (CVD) bzw. Infiltration (CVI) des Kohlenstoffs vorzugsweise ein Gemisch aus Kohlenwasserstoffen, wie Propan oder Methan, und einem inerten Gas, wie Argon oder Stickstoff, bei einer Temperatur zwischen 700 und 1700 °C und einem Partialdruck von 1 - 300 mbar durchgeführt. Diese Gase diffundieren in die offenporige Struktur, zersetzen sich in Kohlenstoff und Wasserstoff, wobei sich der pyrolytische Kohlenstoff vorzugsweise an den Faseroberflächen bzw. an den Faserkreuzungspunkten abscheidet und so ein interner Oxidationsschutz, eine Festigkeitssteigerung und die Einstellung der durchgängigen Porenverteilung erzielt wird. Für die Siliciumcarbidabscheidung verwendet man vorzugsweise siliciumhaltige Gase, vorzugsweise Silane (SiH4) oder silicium- und kohlenstoffhaltige Gase, vorzugsweise Methyltrichlorsilane (MTS) sowie ein Trägergas (meist Wasserstoff oder Argon). Diese Gasmischungen werden in definierten Verhältnissen in den heißen Infiltrationsreaktor, vorzugsweise bei Temperaturen zwischen 800 und 1500 °C eingeleitet. und reagieren zu Siliciumcarbid.
Eine besonders vorteilhafte Gestaltung des erfindungsgemäßen Verfahrens sieht auch vor, daß man den hochporösen CFC-Filterrohling mit seinem unteren Ende in eine Siliciumschmelze stellt. Durch die Kapillarkräfte in der CFC-Filterstruktur steigt das geschmolzene Silicium nach oben und reagiert in-situ mit dem Matrixkohlenstoff bzw. den Kohlenstoffaseroberflächen zu oxidationsbeständigem Siliciumcarbid (SiC) ab Während dieses Infiltrationsprozesses wird der faserverstärkte Keramikrohling aus CFC in kohlenstoffaserverstärktes Siliciumcarbid (C/SiC) umgewandelt bzw. veredelt. Die offene Porosität bzw. innere aktive Filteroberfläche kann je nach geforderten Filtereigenschaften gezielt durch die Infiltrationsprozeßführung, insbesondere die Maximaltemperatur sowie die Haltezeit bei Infiltrationstemperatur und darüberhinaus über die Zugabemenge an geschmolzenem Silicium eingestellt werden. Die Infiltration des CFC-Rohlings erfolgt mit einer solchen Menge an geschmolzenem metallischen Silicium, daß seine Dichte weniger als 1,3 g/cm3, vorzugsweise 0,2 - 1,0 g/cm³ beträgt. Das erfindungsgemäße Verfahren sieht auch vor, daß das poröse CFC-Filterelement nicht in den direktem Kontakt mit dem geschmolzenen Silicium kommt, sondern über den temperaturabhängigen und damit einstellbaren Dampfdruck über die Dampf- bzw. Gasphase in die Filterstruktur infiltriert wird. Filterstrukturen, die aus mehreren Teilelementen gesteckt oder gefügt sind, können außerdem durch das aufsteigende Silicium zu einer Gesamtstruktur verfestigt werden.

Nachfolgend werden bevorzugte Ausführungsformen der Erfindung anhand von Beispielen näher beschrieben.

### AUSFÜHRUNGSFORMEN

### Beispiel 1:

10 flexible Kohlenstoffaser-Vliese/Filze mit einer Dichte von 0,15 g/cm³ sowie ungeordneter bzw. willkührlicher Faserorientierung und einer Wandstärke von jeweils 10 mm werden auf einen Durchmesser von 300 mm zugeschnitten und in Phenolharz getränkt, wobei die eingebrachte Phenolharzmenge vorzugsweise 50 Gew.% bezogen auf das Filzgewicht nicht überschreiten sollte. Im Anschluß an die Harztränkung wurden die gestapelten Filzlagen in einer beheizbaren axialen Presse bei einer Temperatur von 190 °C und einer Preßdauer von 15 Minuten zu einem CFK-Formkörper mit einem Durchmesser von 300 mm bzw. einer Wandstärke von 50 mm verpreßt. Der nach dem Entformen erhaltene Formkörper, beispielsweise eine Platte, wird nun in einem Ofen unter Ausschluß von Sauerstoff, d.h. im Vakuum oder in einer Schutzgasatmosphäre bei etwa 1100 °C pyrolysiert bzw. carbonisiert. Um die Reaktivität der Kohlenstoffasern zu minimieren bzw. Ausgasungseffekte auszuschließen, wird der Vollkörper einer Temperatur von mehr als 2000 °C unter Sauerstoffausschluß, d.h. Vakuum oder in einer Schutzgasatmosphäre, ausgesetzt, wodurch der durch die Pyrolyse (Carbonisierung) des Phenolharzes gebildete Matrixkohlenstoff sowie die Kohlenstoffasern zumindest teilweise graphitiert werden. Diese Graphitierung erfolgt beispielsweise mit einer Aufheizgeschwindigkeit von 40 K/min und einer Haltezeit von 3 Stunden bei 2100 °C. Der erhaltene CFC-Volkörper besitzt eine Dichte von 0,45 g/cm³.
Aus dem Vollkörper wird dann maschinell durch Dreh-, Fräs- und/oder Schleifbearbeitung der Rohling, welcher als Heißgasfilter dient, hergestellt.
Der Rohling mit einer Dichte von 0,45 g/cm³ wird nun in einem Vakuumofen mit einer Aufheizgeschwindigkeit von 20 K pro Minute auf eine Temperatur von 1900 °C aufgeheizt und dort 45 Minuten gehalten. In diesem Vakuumofen ist ein Behälter mit metallischem Silicium enthalten, welches unter dem beschriebenen Temperatureinfluß schmilzt und einen Dampfdruck ausbildet. Das Silicium verdampft und infiltriert bzw. kondensiert in der offenen Porenstruktur der kohlenstoffaserverstärkten Kohlenstoff-Rohstruktur unter gleichzeitiger Bildung von Siliciumcarbid (SiC) auf den Kohlenstoffaseroberflächen. Nach der Abkühlung auf Raumtemperatur beträgt die Dichte des infiltrierten faserverstärkten Filterformkörpers 0,68 g/cm³.
Die mikroskopische Untersuchung der Schnittfläche durch ein Referenzbauteil bestätigte, daß die Kohlenstoffasern zumindest oberflächlich zu Siliciumcarbid abreagiert sind und das der Heißgasfilter-Formkörper eine hohe offene und durchgängige Porosität aufweist.

### Beispiel 2:

Kohlenstoff-Kurzfasern mit einer Länge von 5 - 60 mm mit Ausbrennmittel (die nach der Pyrolyse die Porenstruktur ausbilden) wie z.B. Polyamidgranulat werden in einer Phenolharzsuspension eingerührt. Der Fasergehalt in der Suspension beträgt je nach Anwendungsprofil zwischen 20 und 80 Gew. %. Die Suspension wird in eine zylindrische Form mit einem Durchmesser von 400 mm und einer Höhe von 600 mm gefüllt. Bei 70 - 80 °C werden die im Phenolharz enthaltenen Lösungsmittel unter Vakuumatmosphäre entfernt. Bei einer Temperatursteigerung auf 200 °C erfolgt die Aushärtung des Phenolharzes. Nach dem Entformen wird der zylindrische CFK-Vollkörper unter Ausschluß von Sauerstoff wie in Beispiel 1 pyrolisiert bzw. carbonisiert.
Der erhaltene CFC-Vollkörper mit isotropem Gefüge bzw. Faserverstärkung weist eine Dichte von 0,2 g/cm³ und eine Porosität von etwa 80 Vol. % auf. Um die Reaktivität der verwendeten Kohlenstoffasern zu minimieren bzw. aus dem Phenolharz gebildeten Matrix-Kohlenstoff zumindest teilweise zu Graphit umzuwandeln, wird eine Graphitierung bei Temperaturen von größer 2000 °C, wie in Beispiel 1 beschrieben, vorgenommen.
Aus dem zylindrischen Vollkörper werden dann maschinell durch Dreh-, Fräs- und/oder Schleifbearbeitung die Bauteile hergestellt, die als Heißgasfilter in der Rauchgasreinigung dienen können.
Die Bauteile werden in einem Vakuumofen 40 Stunden lang bei 1100 °C unter Verwendung von Methyltrichlorsilan (MTS) und Wasserstoff (H₂) im Verhältnis 1:10 durch chemische Gasphasenabscheidung/-infiltration (CVD/CVI) mit pyrolytischem Siliciumcarbid infiltriert, bis ihre Dichte 0,4 g/cm³ beträgt und ihre Porosität auf ca. 60 % abgenommen hat. Keramographische Gefügeanschliffe an einer Referenzprobe zeigen, daß sich das Siliciumcarbid lückenlos auf den Kohlenstoffaser-Oberflächen und an den Faserknotenpunkten abgeschieden hat, sodaß eine ausgezeichnete Oxidationsbeständigkeit gegeben ist. Vorteilhafterweise kann die offene und damit durchströmbare Porenstruktur (Filteroberfläche) durch die Prozeßdauer der chemischen Gasphaseninfiltration je nach Anwendungsprofil gezielt und einfach eingestellt werden.

### Beispiel 3:

Es wird ein CFC-Vollkörper gemäß Beispiel 2 hergestellt. Nach der Carbonisierung und Graphitierung wird der CFC-Zylinder mit einer Dichte von 0,2 g/cm³ mechanisch bearbeitet. Die Bauteile werden jetzt in einem Vakuumofen 30 Stunden lang bei 700 °C und einem Partialdruck von 5 mbar unter Verwendung von Propan und Stickstoff im Verhältnis 1:7 durch chemische Gasphaseninfiltration (CVI) mit pyrolytischem Kohlenstoff (PyC) infiltriert, bis ihre Dichte 0,3 g/cm³ beträgt.

Die Filterbauteile werden jetzt in einer Hochtemperatur-Vakuumkammer in ein Graphitgefäß gestellt, dessen Boden mit geschmolzenem Silicium bedeckt ist. Aufgrund der Kapillarkräfte steigt das geschmolzene Silicium in dem Rohling nach oben. Bei weiterer Temperatursteigerung auf etwa 1600 °C - 1700 °C reagiert das infiltrierte Silicium mit dem auf den Faseroberflächen anhaftenden pyrolytischen Kohlenstoff zu Siliciumcarbid.
Nach Abkühlung auf Raumtemperatur weist das Bauteil eine Dichte von 0,8 g/cm³ bei einer durchgängigen Porosität von etwa 45 Vol. % auf.
Bei diesem erfindungsgemäßen Verfahren ist besonders vorteilhaft, daß insitu sowohl die Konvertierung des CFC-Rohstoffs zu oxidationsgeschütztem C/SiC als auch die anwendungsbezogene Einstellung der Porosität bzw. Filteroberfläche erfolgt und so Heißgasfilter beliebiger Geometrie ausgebildet werden.

### Beispiel 4:

Es wird ein handelsübliches gewelltes Fasergewebe oder Wabenmaterial auf Hartpapier-Basis mit einer Dichte von 0,25 g/cm³ und einer Wabenschlüsselweite von 8 mm mit einem Phenolharzbindemittel imprägniert und bei 90 °C getrocknet.
Auf das Fasergewebe oder den Wabenkörper mit einem Durchmesser von 500 mm und einer Wandstärke von 15 mm sind nun in einer beheizbaren Presse bei 180 °C stirnseits jeweils 1 Lage Kohlenstoffaser-Vlies bzw. Filz mit einer Wandstärke von 10 mm aufgepreßt bzw. laminiert worden. Die entstandene CFK-Struktur wird unter Ausschluß von Sauerstoff mit einer Aufheizgeschwindigkeit von 5 K/min auf 1100 °C aufgeheizt und pyrolysiert. Nach einer Haltezeit von 1 Stunde wird auf Raumtemperatur abgekühlt, und man erhält eine Sandwich-Wabenstruktur auf Kohlenstoffbasis, die - abgesehen von einer linearen Schrumpfung von etwa 8 % - dem ursprünglichen Bauteil entspricht. Zur weiteren Verfestigung und zur Verbesserung des Oxidationsschutzes wird die poröse Wabenstruktur über die chemische Gasphasenabscheidung/-infiltration, oder, wie in Beispiel 2, 3 und 4 beschrieben, mit pyrolytischem Kohlenstoff, Siliciumcarbid und katalytisch wirkenden Außenschichten, insbesondere Platin, infiltriert. Das erfindungsgemäße Verfahren sieht auch vor, daß andere keramische Werkstoffe und/oder NE-Metalle in die Kohlenstoffstruktur infiltriert werden können. Das so gewonnene Bauteil mit einem Raumgewicht von 0,35 g/cm³ zeigt Hochtemperatur-4-Punkt-Biegebruchfestigkeiten von größer 250 MPa. Derartige Sandwich-Strukturen können zur direkten und/oder katalytischen Reinigung von heißen Rauchgasen bis zu Temperaturen von 1500 °C eingesetzt werden.

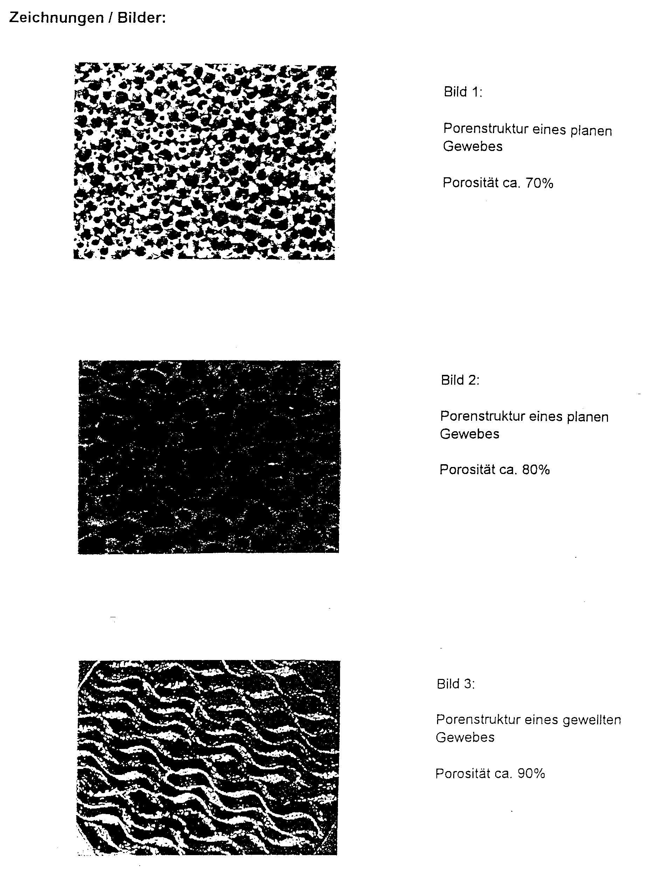

## Patentansprüche

1. Verfahren zur Herstellung von hochtemperaturbeständigen Heißgasfilterelementen aus faserverstärkter Keramik sowie die Verwendung des Heißgasfilters in der Heißgasfiltration, wobei dessen innere Oberfläche Schadstoffe in Rauch- oder Heißgasen filtert und/oder thermisch zersetzt, dadurch gekennzeichnet, daß man einen Kohlenstoff oder Kohlenstoffaser und/oder einen Siliciumcarbid oder Siliciumcarbidfaser enthaltenden Formkörper beliebiger Geometrie mit Silicium oder Siliciumcarbid oder Siliciumoxid enthaltenden Verbindungen mittels Temperaturbehandlung über eine Schmelze und/oder über eine Pyrolyse und/oder über die Dampfphase und/oder die Gasphase infiltriert, wobei die innere aktive Filteroberfläche über die Dichte des Grünkörpers und/oder die Mengenzugabe der zu infiltrierenden Siliciumverbindungen und/oder die Faserstruktur und/oder die Art, Höhe und die Dauer der Temperaturbehandlung eingestellt werden kann.

2. Verfahren zur Herstellung von hochtemperaturbeständigen Heißgasfilterelementen aus faserverstärkter Keramik sowie die Verwendung des Heißgasfilters in der Heißgasfiltration, wobei dessen innere Oberfläche Schadstoffe in Rauch- oder Heißgasen filtert und/oder thermisch zersetzt, mit den Verfahrensschritten
- Infiltrieren von anorganischen Kurzfasern und/oder Vliesen und/oder Filzen und oder Geweben und/oder Waben mit einem Harzbindemittel
- Formgebung von Filterbauteilen über Schlickerguß und/oder Wickel-, Preß-und Laminiertechnik
- Temperaturbehandlung von Formkörpern zur Vernetzung der Harzbindemittel
- Temperaturbehandlung und Pyrolyse unter Vakuum oder Schutzgas zur Umwandlung des ganz oder teilweise vernetzten Harzbindemittels oder Ausbrennmittel in einen keramischen Stoff
- Infiltration des porösen Formkörpers über die Schmelz-, Dampf- oder Gasphase und/oder die Pyrolyse von Polymeren mit C- und/oder Si-haltigen Verbindungen
dadurch gekennzeichnet, daß man die Porosität bzw. innere aktive Filteroberfläche über die Dichte des Grünkörpers und/oder die Mengenzugabe der zu infiltrierenden Kohlenstoff- oder Siliciumverbindungen und/oder die Faserstruktur und/ oder Art, Höhe und die Dauer der Temperaturbehandlung eingestellt werden kann.

3. Verfahren nach einem der vorherigen Ansprüche, dadurch gekennzeichnet, daß man den Formkörper aus faserverstärkter Keramik auf der Basis von kohlenstoffaserverstärkten Kohlenstoffen (CFC) und/oder kohlenstoffaserverstärktem Siliciumcarbid (C/SiC) und/oder siliciumcarbidfaserverstärktem Siliciumcarbid (SiC/SiC) und/oder aluminiumoxidfaserverstärktem Aluminiumoxid (Al₂O₃/Al₂O₃) herstellt.

4. Verfahren nach einem der vorherigen Ansprüche, dadurch gekennzeichnet, daß die Faserverstärkung über willkürlich bzw. isotrop angeordnete Kurzfasern mit einer Vorzugslänge zwischen 1-100 mm und/oder mit Faser-Filzen oder Faser-Vliesen und/oder über Lang- bzw. Endlosfasern bzw. Geweben mit definierter ein- bis n-dimensionaler Orientierung und/oder Waben vorgenommen wird.

5. Verfahren nach einem der vorherigen Ansprüche, dadurch gekennzeichnet, daß die anorganischen Verstärkungsfasern aus Kohlenstoff oder Graphit oder Siliciumcarbid oder Siliciumnitrid oder Aluminiumoxid bestehen.

6. Verfahren nach einem der vorherigen Ansprüche, dadurch gekennzeichnet, daß das Material, aus dem die Filterelemente bestehen, aus einem korrosionsbeständigen kohlenstoffasetuerstärkten Filz, Vlies oder einem Gewebe, das je nach Anforderungsprofil bis zu einer Rohdichte von 0,1 bis 1,2 g/cm³ verdichtet wurde und eine offene Porosität von 30 bis 95 % aufweist, aufgebaut ist.

7. Verfahren nach einem der vorherigen Ansprüche, dadurch gekennzeichnet, daß der Faserkeramik-Formkörper mit Kohlenstoff und/oder Silicium und/oder Siliciumcarbid und/oder Aluminiumoxid so lange infiltriert wird, daß ein freies Porenvolumen des Faserkeramik-Formkörpers von 10 - 90 Vol. % verbleibt.

8. Verfahren nach einem der vorherigen Ansprüche, dadurch gekennzeichnet, daß der Faserkeramik-Formkörper für Anwendungen außerhalb der Heißgasfiltration mit Kohlenstoff und/oder Silicium und/oder Siliciumcarbid und/oder Aluminiumoxid so lange infiltriert wird, daß er eine Dichte von > 1,5 g/cm³ und keine Porosität aufweist.

9. Verfahren nach einem der vorherigen Ansprüche, dadurch gekennzeichnet, daß man die faserverstärkten Keramik-Formkörper über eine Temperaturbehandlung im Bereich von 500 und 2200 °C, vorzugsweise bei einer Temperatur zwischen 1000 °C und 2100 °C, mit Silicium und/oder Siliciumcarbid und/oder Siliciumdioxid und/oder Aluminiumoxid oder deren Verbindungen infiltrieren kann.

10. Verfahren nach einem der vorherigen Ansprüche, dadurch gekennzeichnet, daß man den porösen Formkörper aus faserverstärkter Keramik mit Harzbindemitteln bzw. Polymeren, vorzugsweise Kohlenstoff- oder Siliciumorganische Polymere, infiltrieren kann und diese über eine Temperaturbehandlung keramische Stoffe ausbilden.

11. Verfahren nach einem der vorherigen Ansprüche, dadurch gekennzeichnet, daß man das metallische Silicium bei einer Temperatur oberhalb von 500 °C, vorzugsweise bei einer Temperatur zwischen 1300 und 2100 °C über die Schmelz-, Dampf- oder die Gasphase in die faserverstärkte Keramik infiltriert.

12. Verfahren nach einem der vorherigen Ansprüche, dadurch gekennzeichnet, daß man den faserverstärkten Kohlenstoff-Formkörper zum Infiltrieren mit dem geschmolzenem Silicium mit seinem unteren Ende in geschmolzenes Silicium gestellt wird, wobei das geschmolzene Silicium durch die Kapillarkräfte des Formkörpers in dem Formkörper hochsteigt und zumindest teilweise zu Siliciumcarbid abreagiert.

13. Verfahren nach einem der vorherigen Ansprüche, dadurch gekennzeichnet, daß das Infiltrieren des faserverstärkten Kohlenstoff-Formkörpers mit dem Kohlenstoff und/oder Silicium und/oder Siliciumcarbid und/oder Aluminiumoxid durch chemische Gasphasenabscheidung bei Temperaturen zwischen 500 °C und 2000 °C erfolgt.

14. Verfahren nach einem der vorherigen Ansprüche, dadurch gekennzeichnet, daß man das Infiltrieren von Kohlenstoff oder Silicium oder Siliciumcarbid in Schutzgasatmosphäre oder im Vakuum vornimmt.

15. Verfahren nach einem der vorherigen Ansprüche, dadurch gekennzeichnet, daß man die Heißgasfilter aus Kohlenstoff-Material bzw. kohlenstoffaserhaltigem und danach carbonisiertem bzw. graphitierten Material herstellt.

16. Verfahren nach einem der vorherigen Ansprüche, dadurch gekennzeichnet, daß man in den Formkörper Kohlenstoff und/oder Silicium und/oder Siliciumcarbid und/oder Aluminiumoxid, vorzugsweise durch chemische Gasphasenabscheidung, einbringt.

17. Verfahren nach einem der vorherigen Ansprüche, dadurch gekennzeichnet, daß man katalytisch wirkende Außenschichten, insbesondere Platin in die faserverstärkte Keramik infiltriert.

18. Heißgasfilter nach einem der vorhergehenden Ansprüche, dadurch gekennzeichnet, daß das Filterelement aus faserverstärkter Keramik auf der Basis von kohlenstoffaserverstärkten Kohlenstoffen (CFC) und/oder kohlenstoffaserverstärktem Siliciumcarbid (C/SiC) und/oder siliciumcarbidfaserverstärktem Siliciumcarbid (SiC/SiC) und/oder aluminiumoxidfaserverstärktem Aluminiumoxid (Al₂O₃/Al₂O₃) besteht.

19. Heißgasfilter nach einem der vorherigen Ansprüche, dadurch gekennzeichnet, daß das Filterelement aus mehreren Stücken zusammengesetzt und die Stücke miteinander fest verbunden sind, vorzugsweise zur Bildung einstückiger Körper.

20. Verwendung eines Heißgasfilters nach einem der vorherigen Ansprüche zur thermischen Aufbereitung und Verwertung von Roh-, Rest- und Abfallstoffen.

21. Verwendung eines Heißgasfilters nach einem der vorherigen Ansprüche in allen Kraftwerkstechnologien wie z.B. die druckaufgeladene Wirbelschichtfeuerung und die Kohlevergasung.

22. Verwendung eines Heißgasfilters nach einem der vorherigen Ansprüche als Filterelement oder Filterkerze beliebiger Geometrie in der Heiß- und Kaltgasfiltration sowie Rauchgasreinigung.

23. Verwendung eines Heißgasfilters nach Anspruch 17 als Katalysator.

24. Verwendung eines Heißgasfilters nach einem der vorherigen Ansprüche in der Müllverbrennung, in der keramischen Industrie, in Anlagen zur Abscheidung von Aluminium-, Zinn-/ und Zinkstäuben und bei der Verglasung von Rohstoffen.

25. Verwendung eines Heißgasfilters nach einem der vorherigen Ansprüche in allen thermischen Prozeßanlagen.
